# EUROPÄISCHE PATENTSCHRIFT

(11) **EP 2 863 605 B1**
(45) Veröffentlichungstag und Bekanntmachung des Hinweises auf die Patenterteilung: **28.03.2018**
(21) Anmeldenummer: 14003522.1
(22) Anmeldetag: 14.10.2014
(51) Int. Cl.: H04L 29/06, H04W 12/06, H04W 12/02, G06F 21/00, G06F 21/74, G06F 9/44, H04L 29/08, G06F 21/53, H04W 4/00

(54) **MOBILES ENDGERÄT-SYSTEM MIT SICHERHEITSBETRIEBSSYSTEM**
MOBILE END DEVICE SYSTEM WITH SAFETY OPERATION SYSTEM
SYSTÈME DE TERMINAL MOBILE DOTÉ D'UN SYSTÈME DE SÉCURITÉ

(30) Priorität: 21.10.2013 DE 102013017458
(43) Veröffentlichungstag der Anmeldung: 22.04.2015
(73) Patentinhaber: Giesecke+Devrient Mobile Security GmbH, 81677 München (DE)
(72) Erfinder: Weiß, Dieter, 81825 München (DE)

(56) Entgegenhaltungen:
- EP-A1- 2 387 203
- EP-A2- 2 378 455
- "GlobalPlatform Device Technology TEE System Architecture", , 1. Dezember 2011 (2011-12-01), Seiten 1-24, XP055117057, Gefunden im Internet: URL:http://www.globalplatform.org/specific ationsdevice.asp [gefunden am 2014-05-08]

## Beschreibung

Die Erfindung betrifft ein Endgerät-System umfassend ein mobiles Endgerät, in dem ein Sicherheitsbetriebssystem implementiert ist, unter dessen Steuerung in dem Endgerät eine sichere Laufzeitumgebung herstellbar ist.

In mobilen Endgeräten wie Smartphones, (mobilfunkfähigen) Tablet PCs und dergleichen sind sichere Laufzeitumgebungen TEEs (TEE = trusted execution environment) bekannt, bei denen auf Software-Ebene eine Trennung zwischen Ausführungsumgebungen unterschiedlicher Sicherheitsniveaus erzeugt wird. Eine erste, auch "Normal Zone", "Normal World" oder "Rich Execution Environment REE" genannte unsichere oder normale Laufzeitumgebung ist durch ein Normalbetriebssystem (z.B. Android, Windows Phone, Symbian, iOS) gesteuert. Eine zweite, auch "Trustzone", "Trusted World", "Secure World" oder "Trusted Execution Environment TEE" genannte sichere oder vertrauenswürdige Laufzeitumgebung ist durch ein Sicherheitsbetriebssystem gesteuert.

Das Dokument "Global Platform Device Technology: TEE System Architecture, Version 1.0, December 2011" beschreibt ein mobiles Endgerät mit einer normalen oder unsicheren Ausführungsumgebung "Rich Execution Environment (REE)" und einer sicheren Ausführungsumgebung "Trusted Execution Environment (TEE)" (vgl. Kapitel 1). Das Dokument EP 2 387 203 A1 offenbart ein Endgerät-System mit einem als "client terminal" bezeichneten Endgerät und einem als "server device" bezeichneten Server. Über einen Kanal ist eine auf dem Server laufende Ausführungsumgebung in das Endgerät einblendbar. Im Dokument EP 2 378 455 A2 ist eine in einer Cloud-Umgebung angesiedelte sichere Laufzeitumgebung offenbart.

Applikationen (z.B. Apps, Applets oder Treibern), die in der sicheren Laufzeitumgebung ausgeführt werden, stellt das Sicherheitsbetriebssystem Sicherheitsfunktionen wie Verschlüsselung und die Nutzung sicherer Kanäle zwischen dem Endgerät und externen Geräten (z.B. anderen Endgeräten oder Servern) für die Übertragung von Daten vom und zum Endgerät zur Verfügung. Applikationen, die in der normalen Laufzeitumgebung ausgeführt werden, stehen nur die Funktionen des Normalbetriebssystems zur Verfügung, nicht aber die Sicherheitsfunktionen des Sicherheitsbetriebssystems.

Prinzipiell haben mobile Endgeräte, wie beispielsweise Smartphones, leistungsfähige Prozessoren und ein hohes Speichervolumen, insbesondere große Arbeitsspeicher RAM und große Applikationsspeicher (Programmspeicher). Dies gilt auch für Endgeräte mit zweigeteilter Laufzeitumgebung.

In der sicheren Laufzeitumgebung nutzbar sind allerdings nur speziell angepasste Speicher, in denen die Sicherheitsfunktionen (z.B. Verschlüsselung, sichere Kanäle) des Sicherheitsbetriebssystems gewährleistet sind. Der hohe Aufwand dieser Anpassung wird nur für einen Teil der Speicher eines mobilen Endgeräts durchgeführt. Zusätzlich erschwert wird die Anpassung dadurch, dass es eine Vielzahl von unterschiedlichen Endgeräte-Typen gibt und die Anpassung für jeden Endgeräte-Typ individuell erfolgen muss.

Der Gesamt-Arbeitsspeicher RAM eines leistungsfähigen Smartphones beträgt typischerweise zwei GigaByte (z.B. LG Google Nexus 4, Samsung Galaxy S4, Nokia Lumia 1020, ...). Dem Sicherheitsbetriebssystem stehen in einem Smartphone mit sicherer Laufzeitumgebung typischerweise nur 64 kByte im flüchtigen Arbeitsspeicher RAM zur Verfügung. Somit sind komplexe Applikationen in der sicheren Laufzeitumgebung nicht lauffähig.

Doch nicht nur Speicher des Endgeräts müssen angepasst werden. Auch Applikationen für die sichere Laufzeitumgebung müssen speziell auf das Sicherheitsbetriebssystem angepasst entwickelt und zertifiziert werden. Dies führt dazu, dass das Sicherheitsbetriebssystem nur bei besonders finanzstarken und sicherheitsbewussten App-Entwicklungen eingebunden wird. Eine Vielzahl von Apps, wie sie von gängigen App-Stores (z.B. iTunes oder Google Play) angeboten werden, ist dagegen nur unter dem Normalbetriebssystem lauffähig und kann die Sicherheitsfunktionen des Sicherheitsbetriebssystem nicht nutzen. Somit läuft das Sicherheitsbetriebssystem an sich Gefahr, eine Randerscheinung zu bleiben.

Der Erfindung liegt die Aufgabe zu Grunde, in einem mobilen Endgerät eine durch ein Sicherheitsbetriebssystem gesteuerte sichere Laufzeitumgebung zu ermöglichen, die einfacher zu handhaben ist, so dass in Folge die Akzeptanz des Sicherheitsbetriebssystems verbessert ist.

Die Aufgabe wird gelöst durch ein Endgerät-System nach Anspruch 1. Vorteilhafte Ausgestaltungen der Erfindung sind in den abhängigen Ansprüchen angegeben.

Das erfindungsgemäße Endgerät-System nach Anspruch 1 umfasst ein mobiles Endgerät, in dem ein Sicherheitsbetriebssystem implementiert ist, unter dessen Steuerung in dem Endgerät eine sichere Laufzeitumgebung herstellbar ist. Die sichere Laufzeitumgebung ist dazu vorgesehen, in der sicheren Laufzeitumgebung ausgeführten Applikationen die Sicherheitsfunktionalitäten - z.B. Verschlüsselung und sichere Kanäle zur Datenübertragung vom und zum Endgerät - des Sicherheitsbetriebssystems bereitzustellen. Das erfindungsgemäße Endgerät-System umfasst weiter: - einen Sicherheitsserver, auf dem ein Server-Sicherheitsbetriebssystem implementiert ist, unter dessen Steuerung eine virtuelle sichere Laufzeitumgebung auf dem Sicherheitsserver herstellbar ist, - einen sicheren Kanal, über den die virtuelle sichere Laufzeitumgebung des Sicherheitsservers an die sichere Laufzeitumgebung des Endgeräts übertragbar ist, und - eine Einblend-Einrichtung, mit der die virtuelle sichere Laufzeitumgebung des Sicherheitsservers über den sicheren Kanal in die sichere Laufzeitumgebung des Endgeräts einblendbar ist, so dass die tatsächlich auf dem Sicherheitsserver hergestellte virtuelle Laufzeitumgebung als scheinbar auf dem Endgerät hergestellt erscheint.

Im erfindungsgemäßen Endgerät-System laufen angepasste Applikation, die unter dem Sicherheitsbetriebssystem laufen sollen, auf dem Sicherheitsserver ab. Die sichere Laufzeitumgebung des mobilen Endgeräts wird lediglich als sicherer Zugriffspunkt auf die virtuelle sichere Laufzeitumgebung auf dem Sicherheitsserver verwendet. Beschränkte sichere Ressourcen (z.B. sicherer Arbeitsspeicher, sicherer Applikationsspeicher) des Endgeräts stellen für die Ausführung der angepassten Applikationen keine Beschränkung dar. Auf dem Sicherheitsserver andererseits ist es einfach möglich, nur einen einzigen Servertyp vorzusehen, im Unterschied zu vielen unterschiedlichen Endgeräte-Typen. Wird nur ein einziger Servertyp vorgesehen, müssen Anpassungen von Ressourcen des Servers (z.B. Arbeitsspeicher, Applikationsspeicher) und von Applikationen an ein Sicherheitsbetriebssystem nur für diesen einzigen Servertyp durchgeführt werden. Daher ist es auf dem Sicherheitsserver einfacher als auf Endgeräten, große Mengen an Arbeitsspeicher und Applikationsspeicher unter Verwaltung eines Sicherheitsbetriebssystems bereitzustellen. Ebenso ist es auf dem Sicherheitsserver einfacher als auf Endgeräten, eine Vielzahl von Applikationen in für das Sicherheitsbetriebssystem angepasster Form anzubieten. Somit steigt auch die Bereitschaft von Applikationsanbietern, ihre Applikationen (auch) in einer auf ein Sicherheitsbetriebssystem angepassten Form anzubieten.

Erfindungsgemäß umfasst das Endgerät-System weiter eine Applikations-Lade-Einrichtung, die dazu eingerichtet ist, mittels des Endgeräts Applikationen von einem Applikations-Anbieter herunterzuladen. Die Applikations-Lade-Einrichtung umfasst einen auf dem Sicherheitsserver eingerichteten Server-Lade-Teil, der dazu eingerichtet ist, auf eine Aufforderung vom Endgerät hin die Applikation herunterzuladen, so dass die Applikation vom Endgerät aus zur Ausführung aufrufbar ist. Die Applikation kann dabei z.B. in den Sicherheitsserver oder in das Endgerät geladen werden, wie nachfolgend noch beschrieben ist. Wahlweise umfasst die Applikations-Lade-Einrichtung weiter einen Endgerät-Lade-Teil, der dazu eingerichtet ist, vom Endgerät aus eine Aufforderung zum Herunterladen einer Applikation an den Applikations-Anbieter zu übermitteln.

Daher ist mit dem Endgerät-System gemäß Anspruch 1 erreicht, dass die sichere Laufzeitumgebung, in der die Applikationen laufen sollen, nämlich hier die virtuelle sichere Laufzeitumgebung, leichter handhabbar ist, d.h. mit sicherem Speicher und angepassten Applikationen ausstattbar ist. Hierdurch ist die Akzeptanz des Sicherheitsbetriebssystems an sich verbessert.

Wahlweise ist der Kanal zwischen dem Sicherheitsserver und dem Endgerät durch gegenseitige Authentisierung und verschlüsselte Datenübertragung zwischen dem Sicherheitsserver und dem Endgerät geschützt.

Wahlweise weist das Endgerät-System weiter auf: eine Schnittstelle zu einer Datenbank, in der ein Authentisierungsschlüssel abgelegt ist, der für eine Authentisierung des Sicherheitsservers gegenüber der sicheren Laufzeitumgebung des Endgeräts erforderlich ist, und eine Kanalherstellungs-Einrichtung, die dazu eingerichtet ist, dass bei einer Herstellung des sicheren Kanals zwischen dem Sicherheitsserver und dem Endgerät der Authentisierungsschlüssel durch den Sicherheitsserver aus der Datenbank ausgelesen wird.

Die Einblend-Einrichtung umfasst wahlweise einen auf dem Sicherheitsserver eingerichteten Server-Einblend-Teil und einen auf dem Endgerät eingerichteten Endgerät-Einblend-Teil. Der Server-Einblend-Teil ist dazu eingerichtet, zu der virtuellen sicheren Laufzeitumgebung des Sicherheitsservers eine auf einer Ausgabeeinheit des Endgeräts darstellbare Darstellung der virtuellen sicheren Laufzeitumgebung des Sicherheitsservers zu erzeugen. Der Endgerät-Einblend-Teil ist dazu eingerichtet, die vom Server-Einblend-Teil erzeugte Darstellung der virtuellen sicheren Laufzeitumgebung des Sicherheitsservers entgegenzunehmen und an der Ausgabeeinheit, z.B. einem Display, des Endgeräts darzustellen. Der Server-Einblend-Teil verleiht dem Sicherheitsserver die Funktion eines Terminalservers. Der Endgerät-Einblend-Teil verleiht dem Endgerät die Funktion eines Terminal-Client. Ein Nutzer, der die Ausgabeeinheit (z.B. Display) des Endgeräts betrachtet, sieht darauf die Aktivität der virtuellen sicheren Laufzeitumgebung des Sicherheitsservers. Falls in der sicheren Laufzeitumgebung ein oder mehrere Applikationen ausgeführt werden, erzeugt der Server-Einblend-Teil zu der bzw. den Applikation(en) ebenfalls eine darstellbare Darstellung für die Ausgabeeinheit, z.B. Display, des Endgeräts.

Wahlweise ist der Server-Einblend-Teil dazu eingerichtet, eine durch einen Grafiktreiber eines Displays des Endgeräts verarbeitbare Darstellung der virtuellen sicheren Laufzeitumgebung des Sicherheitsservers zu erzeugen, und der Endgerät-Einblend-Teil dazu eingerichtet, die erzeugte Darstellung an den Grafiktreiber des Displays des Endgeräts bereitzustellen. Ggf. in der virtuellen sicheren Laufzeitumgebung ausgeführte Applikationen werden ebenfalls in eine Darstellung gebracht, die der Grafiktreiber des Endgeräts direkt verarbeiten kann, um an der Ausgabeeinheit (z.B. Display) die Applikation anzuzeigen.

Wahlweise umfasst die Applikations-Lade-Einrichtung weiter eine Ladeziel-Festlegungs-Einrichtung, mit der ein Ladeziel festlegbar ist, an welches die Applikation geladen wird. Dabei ist als Ladeziel festlegbar: entweder der Sicherheitsserver, so dass die auf den Sicherheitsserver heruntergeladene Applikation in der virtuellen sicheren Laufzeitumgebung ausführbar ist, oder das Endgerät, so dass die in das Endgerät heruntergeladene Applikation im Endgerät ausführbar ist. Der Nutzer des Endgeräts kann somit auswählen, ob er Applikationen aus z.B. einem App-Store in sein Endgerät lädt oder in die virtuelle Ausführungsumgebung des Sicherheitsservers. Vorzugsweise wählt der Nutzer für sicherheitskritische Applikationen den Sicherheitsserver als Ladeziel aus.

Wahlweise ist das Ladeziel durch Auswahl einer Applikation festlegbar. Beispielsweise wird, indem der Nutzer eine sicherheitskritische Applikation auswählt, die für eine sichere Laufzeitumgebung angepasst ist, ohne Eingriffsmöglichkeit durch den Nutzer der Sicherheitsserver als Ladeziel festgelegt. Für normale Applikationen wird wahlweise automatisch das Endgerät als Ladeziel festgelegt.

Alternativ, falls entsprechende Applikations-Varianten zur Verfügung stehen, kann der Nutzer auswählen, ob eine sicherheitskritische Applikation in die reale sichere Laufzeitumgebung des Endgeräts oder in die virtuelle sichere Laufzeitumgebung des Sicherheitsservers geladen wird. Der Sicherheitsserver kann wahlweise insbesondere dann als Ladeziel ausgewählt werden, wenn das Endgerät keinen Platz mehr für sichere Applikationen bietet.

Wahlweise wird in einem vorgeschalteten Prüfschritt, bevor das Ladeziel festgelegt wird, geprüft, ob für das Endgerät eine virtuelle sichere Laufzeitumgebung auf einem Sicherheitsserver verfügbar ist.

Wahlweise ist in dem Endgerät weiter ein Normalbetriebssystem implementiert, unter dessen Steuerung in dem Endgerät eine normale Laufzeitumgebung herstellbar ist. Dabei ist die in das Endgerät heruntergeladene Applikation entweder in der sicheren Laufzeitumgebung des Endgeräts oder in der normalen Laufzeitumgebung des Endgeräts ausführbar.

Insbesondere kann bei einem Endgerät, das eine normale und eine sichere Laufzeitumgebung hat, beim Herunterladen eine Auswahlmöglichkeit zwischen den Ladezielen normale Laufzeitumgebung des Endgeräts, reale sichere Laufzeitumgebung des Endgeräts und virtuelle sichere Laufzeitumgebung des Sicherheitsservers bestehen.

Wahlweise umfasst das Endgerät-System weiter zumindest eine Applikation, die auf dem Sicherheitsserver implementiert ist, und die aus der sicheren Laufzeitumgebung des Endgeräts heraus derart aufrufbar ist, dass die Applikation, sobald sie aufgerufen ist, tatsächlich auf dem Sicherheitsserver in der virtuellen sicheren Laufzeitumgebung des Sicherheitsservers ausgeführt wird und scheinbar auf dem Endgerät ausgeführt wird.

Gemäß einer ersten Ausführungsform ("Remote Desktop", entfernte Benutzeroberfläche) können mehrere Applikationen gleichzeitig auf dem Sicherheitsserver aufgerufen sein und erfindungsgemäß in die reale sichere Laufzeitumgebung Endgerät eingeblendet sein. In diesem Fall ist auf dem Sicherheitsserver ein vollständiges virtuelles Endgerät hergestellt, das in die "leere" reale sichere Laufzeitumgebung des realen Endgeräts eingeblendet wird. Die virtuelle Benutzeroberfläche auf dem Sicherheitsserver wird in die reale Benutzeroberfläche auf dem Endgerät eingeblendet. Die reale sichere Laufzeitumgebung des realen Endgeräts bildet nur einen sicheren Endpunkt und Zugriffspunkt auf das virtuelle sichere Endgerät.

Gemäß einer zweiten Ausführungsform ("Remote App", entfernte Applikation) kann jeweils nur eine einzige Applikation gleichzeitig aufgerufen sein. Hierdurch ist eine - möglicherweise schädliche - Wechselwirkung zwischen unterschiedlichen Applikationen verhindert. Denn in der virtuellen Laufzeitumgebung läuft isoliert nur eine einzige Applikation, wie in einer aus z.B. dem Java Bereich bekannten sogenannten Sandbox. Insbesondere kann in diesem Fall, vorausgesetzt die erste Applikation an sich ist sicher, keine zweite, Virus- oder Trojaner-behaftete Applikation Schäden an der ersten Applikation verursachen, da ja neben der ersten Applikation keine zweite Applikation in die virtuelle Laufzeitumgebung hereingelassen wird.

Wahlweise sind im Sicherheitsserver mehrere virtuelle sichere Laufzeitumgebungen vorgesehen. Wahlweise umfassen die mehreren virtuellen sicheren Laufzeitumgebungen die Laufzeitumgebungen von mehreren einzelnen Applikationen, wobei in jeder Laufzeitumgebung eine einzige Applikation zur isolierten Ausführung implementiert ist (d.h. mehrere Laufzeitumgebungen im "Remote App" Modus). Wahlweise umfassen, zusätzlich oder alternativ, die mehreren virtuellen sicheren Laufzeitumgebungen die Laufzeitumgebungen zu mehreren unterschiedlichen körperlichen Endgeräten.

Im Folgenden wird die Erfindung an Hand von Ausführungsbeispielen und unter Bezugnahme auf die Zeichnung näher erläutert, in der zeigen:
- Fig.1: das Herunterladen einer App, mittels eines Smartphones, aus einem App-Store in das Smartphone, gemäß dem Stand der Technik;
- Fig. 2: das Herunterladen einer App, mittels eines Smartphones, aus einem App-Store in eine virtuelle sichere Laufzeitumgebung eines Sicherheitsservers TCS, gemäß einer Ausführungsform der Erfindung;
- Fig. 3: die Nutzung einer gemäß Fig. 2 in eine virtuelle sichere Laufzeitumgebung eines Sicherheitsservers TCS heruntergeladenen App von einem Smartphone aus, gemäß einer Ausführungsform der Erfindung;
- Fig. 4: die Funktionsweise einer Einblend-Einrichtung, mit der eine virtuelle sichere Laufzeitumgebung eines Sicherheitsservers in eine reale sichere Laufzeitumgebung eines Smartphones einblendbar ist, gemäß einer Ausführungsform der Erfindung.

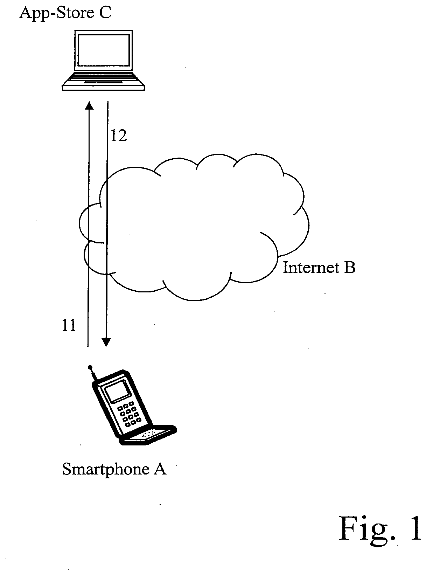

Fig. 1 zeigt das Herunterladen einer App (Applikation), mittels eines Smartphones A, aus einem App-Store C über das Internet B in das Smartphone A, gemäß dem Stand der Technik. In einem Schritt 11 loggt sich ein Benutzer des Smartphones A über das Internet B im App-Store C ein und wählt die von ihm gewünschte App aus. In einem Schritt 12 wird die gewünschte App auf das Smartphone A übertragen und dort installiert. Nun steht die App dem Benutzer zur Verfügung und kann wie gewohnt genutzt werden.

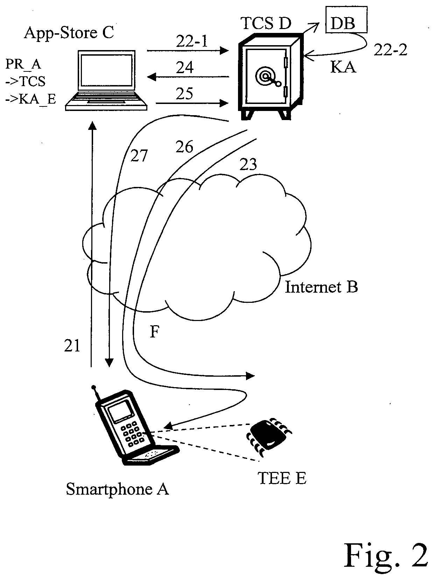

Fig. 2 zeigt das Herunterladen einer App, mittels eines Smartphones A, aus einem App-Store C in eine virtuelle sichere Laufzeitumgebung eines Sicherheitsservers TCS D, gemäß einer Ausführungsform der Erfindung. Im Vergleich zum Verfahren aus Fig. 1 ist beim Verfahren aus Fig. 2 zusätzlich ein Sicherheitsserver TCS (TCS = Trusted Cloud Server) D beteiligt.

In einem Registrierungsschritt (in Fig. 2 nicht dargestellt) lässt der Benutzer des Smartphones A beim App-Store C ein Profil PR_A für sein Smartphone A anlegen. Der App-Store C zieht das Profil PR_A heran, wenn der Benutzer künftig mit dem Smartphone A Apps herunterlädt. Im Profil PR_A ist ein Hinweis ->TCS vermerkt, dass für das Smartphone A eine virtuelle Laufzeitumgebung auf einem Sicherheitsserver TCS D verfügbar ist. Darüber hinaus sind im Profil PR_A des Smartphones A eine IP-Adresse des Smartphones und eine Login-Benutzerkennung vermerkt. Weiter ist im Profil PR_A eine Verknüpfung ->KA_E angelegt, die es dem App-Store C ermöglicht, den Authentisierungsschlüssel KA_E der realen sicheren Laufzeitumgebung TEE E des Smartphones A zu ermitteln.

Nachfolgend wird, weiter unter Bezugnahme auf Fig. 2, das Herunterladen einer App beschrieben.

In Schritt 21 loggt sich der Benutzer des Smartphones A über das Internet B im App-Store C ein. Der App-Store C erkennt, dass im Profil TR(A) des Benutzers bzw. des Smartphones A ein Verweis ->TCS auf einen Sicherheitsserver TCS D hinterlegt ist.

In Schritt 22 kontaktiert der App-Store C in Teilschritt 22-1 den Sicherheitsserver TCS D und stellt dem Sicherheitsserver TCS D die IP-Adresse des Smartphones A und/ oder die Login-Benutzerkennung, die der Nutzer zuvor zum Login Schritt 21 verwendet hat, zur Verfügung. Der Sicherheitsserver TCS D holt in Teilschritt 22-2 anhand der Login-Benutzerkennung (oder / und anhand der IP-Adresse) den Authentisierungsschlüssel KA_E der zugehörigen realen sicheren Laufzeitumgebung TEE E des Smartphones A aus einer Datenbank DB, in der Authentisierungsschlüssel einer Vielzahl von sicheren Laufzeitumgebungen einer Vielzahl von Smartphones abgespeichert sind.

In Schritt 23 stellt der Sicherheitsserver TCS D unter Verwendung der IP-Adresse des Smartphones A eine Verbindung mit der realen sicheren Laufzeitumgebung TEE E des Smartphones A her und führt mit Hilfe des zuvor ermittelten Authentisierungsschlüssels KA_E eine gegenseitige Authentisierung mit dem TEE E durch. Ist die Authentisierung erfolgreich, dann stammt insbesondere das Login vom Smartphone A mit der passenden sicheren Laufzeitumgebung TEE E und gilt als verifiziert. Schließlich vereinbaren die reale sicheren Laufzeitumgebung TEE E des Smartphones A und die virtuelle sichere Laufzeitumgebung des Sicherheitsservers TCS D Sitzungsschlüssel. Alle nachfolgenden Datenübertragungen zwischen der realen und der virtuellen sicheren Laufzeitumgebung erfolgen verschlüsselt mit einem Sitzungsschlüssel.

In Schritt 24 teilt der Sicherheitsserver TCS D dem App-Store C die erfolgreiche Verifizierung des Smartphone A mit. Daraufhin bietet der App-Store C dem Benutzer zwei Installationsziele für die gewählte App an: Die normale Laufzeitumgebung REE des Smartphones A - was einer ganz normalen Installation entspricht - und die virtuelle sichere Laufzeitumgebung (gesteuert durch ein virtuelles, emuliertes Smartphone-Sicherheits-Betriebssystem) im Sicherheitsserver TCS D - was aus Sicht des Benutzers einer "sicheren" Installation entspricht. Wählt der Benutzer die normale Installation, wird die App wie bekannt auf das Smartphone A heruntergeladen und dort installiert. Für diesen Fall endet das Verfahren hier.

Wählt der Benutzer jedoch die "sichere Installation", wird mit Schritt 25 fortgefahren. Der Download der gewählten App werden nun in die virtuelle sichere Laufzeitumgebung des Sicherheitsservers TCS D durchgeführt.

Um die - meist interaktive - Installation der App innerhalb des Sicherheitsservers TCS D durchführen zu können, eröffnet der Sicherheitsserver TCS D in Schritt 26 eine verschlüsselte Verbindung mit der realen sicheren Laufzeitumgebung TEE E des Smartphones A. Zur realen sicheren Laufzeitumgebung TEE E hin überträgt der Sicherheitsserver TCS D einen komprimierten Datenstrom mit dem Bildschirminhalt, der anlässlich der Installation der App angezeigt werden soll. Der Datenstrom beinhaltet eine Darstellung des Bildschirminhalts in einem Format, das durch das Display des Smartphones A unmittelbar darstellbar ist, also z.B. Steuerungsanweisungen für die einzelnen Pixel des Displays des Smartphones A. Die reale sichere Laufzeitumgebung TEE E des Smartphones A nimmt den Bildschirminhalt entgegen und stellt ihn auf dem (Display des) Smartphone A dar. Der Benutzer nimmt während des Herunterladens und Installierens der App am Smartphone A Eingaben vor, z.B. am Touchscreen des Displays, oder/und an einer Tastatur oder einzelnen Tasten. Die reale sichere Laufzeitumgebung TEE E des Smartphones A überträgt die Eingaben des Benutzers zum Sicherheitsserver TCS D, so dass auf dem Sicherheitsserver TCS D den Eingaben entsprechende Steuerungen zur Steuerung der Installation vorgenommen werden. Mit dem Start der Installation der App im Sicherheitsserver TCS D ist die Installation demnach sofort auch auf dem Smartphone A sichtbar. Sollten im Rahmen der Installation Benutzereingaben erforderlich sein, sind diese ebenfalls möglich. Falls weiter der Tastaturtreiber in der realen sicheren Laufzeitumgebung TEE E implementiert ist, was bevorzugt der Fall ist, sind zudem die Benutzereingaben vor Manipulationen durch Trojaner auf dem Smartphone A geschützt.

Optional kann vor Beginn der App-Installation eine sichere PIN- oder Passwortabfrage durch die reale sichere Laufzeitumgebung TEE E oder durch den Sicherheitsserver TCS D erfolgen.

In Schritt 27 meldet der Sicherheitsserver TCS D die erfolgreiche Installation zurück an den App-Store C, so dass dieser sowohl die App als installiert vermerken als auch die erfolgreiche Installation für den Benutzer anzeigen kann. Gleichzeitig wird die in Schritt 26 aufgebaute Verbindung zum Sicherheitsserver TCS D wieder getrennt, so dass für den Benutzer auf dem Smartphone A wieder der Webbrowser des Smartphones A mit dem App-Store C sichtbar wird.

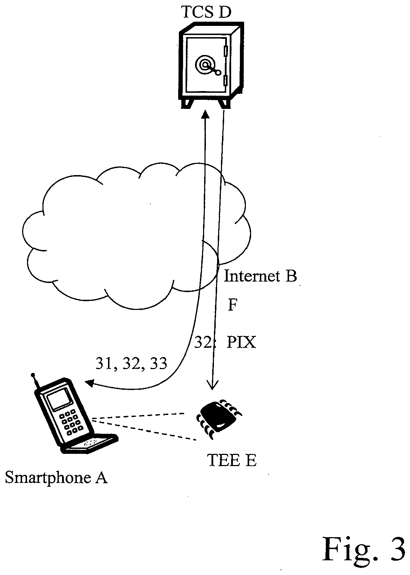

Fig. 3 zeigt die Nutzung einer gemäß Fig. 2 in eine virtuelle sichere Laufzeitumgebung eines Sicherheitsservers TCS D heruntergeladenen App von einem Smartphone A aus, gemäß einer Ausführungsform der Erfindung.

In Schritt 31 ruft der Benutzer zunächst vom Smartphone A aus die virtuelle sichere Laufzeitumgebung auf dem Sicherheitsserver TCS D auf, unter der die App implementiert ist. Das Smartphone A stellt gewissermaßen einen Terminal-Client und der Sicherheitsserver TCS D einen Terminal-Server in einem Terminal-Dienst-Verhältnis zwischen dem Smartphone A und dem Sicherheitsserver TCS D dar. Der Sicherheitsserver TCS D liest aus der Datenbank DB den Authentisierungsschlüssel KA_E der sicheren Laufzeitumgebung TEE E des Smartphones A aus. Die sichere Laufzeitumgebung TEE E des Smartphones A und die virtuelle sichere Laufzeitumgebung des Sicherheitsservers TCS D führen mit dem Authentisierungsschlüssel KA_E eine gegenseitige Authentisierung durch und erzeugen kryptographische Sitzungsschlüssel. Nachfolgend werden alle zwischen der virtuellen sicheren Laufzeitumgebung des Sicherheitsservers TCS D und der realen sicheren Laufzeitumgebung TEE E des Smartphones A übertragenen Daten (Applikationen, Steuerungsbefehle, ...) mit einem Sitzungsschlüssel verschlüsselt.

Üblicherweise führt in Schritt 31 zudem die reale oder virtuelle sichere Laufzeitumgebung eine sichere PIN- oder Passwortabfrage durch.

In Schritt 32 stellt der Sicherheitsserver TCS D verschlüsselte Bilddaten PIX bereit, die die reale sichere Laufzeitumgebung TEE E entschlüsselt und vom Smartphone A des Benutzers auf dem Display darstellen lässt. In umgekehrter Richtung sendet die reale sichere Laufzeitumgebung TEE E des Smartphone A Eingaben (eingegeben z.B. über Tastatur, Touchschreen-Display) mit z.B. Steuerungsbefehlen des Benutzers an die virtuelle sichere Laufzeitumgebung des Sicherheitsservers TCS D.

Die virtuelle Laufzeitumgebung des Sicherheitsservers TCS D bietet dem Benutzer auf dem Smartphone-Display ein Auswahlmenü mit zwei unterschiedlichen Modi an: Modus A Remote Desktop und Modus B Remote App.

Im Modus A Remote Desktop stellt der Sicherheitsserver TCS D eine vollständige virtualisierte Smartphone-Laufzeitumgebung zur Verfügung, welche alle Apps umfasst, die im Sicherheitsserver TCS D installiert wurden. In diesem Modus erhält der Benutzer praktisch ein virtuelles Smartphone, welches von seinem (physisch vorhandenen) realen Smartphone A unabhängig ist, und zu dem das reale Smartphone A nur den Einstiegspunkt bildet. Durch die reale sichere Laufzeitumgebung TEE E ist der Einstiegspunkt kryptologisch sicher. Im Modus A Remote Desktop dürfen vorzugsweise nur speziell geprüfte Apps des App-Store C auf dem Sicherheitsserver TCS D installiert werden. Hierdurch wird verhindert, dass mit Schadsoftware, z.B. Trojanern, infizierte Apps in die virtuelle sichere Laufzeitumgebung gelangen und dort andere Apps schädigen.

Im Modus B Remote App wird innerhalb der virtuellen sicheren Laufzeitumgebung immer nur eine einzige App auf einmal ausgeführt. Falls der Benutzer Modus B wählt, wählt er somit zusätzlich eine gewünschte App aus. Diese App besitzt die Möglichkeit, ihre Daten persistent innerhalb der virtuellen sicheren Laufzeitumgebung zu speichern, so dass diese bei der nächsten Sitzung wieder vorhanden sind. Da die App die einzige in der virtuellen sicheren Laufzeitumgebung ist, besitzt sie keinen Zugriff auf andere Apps auf dem Sicherheitsserver TCS D, sondern nur auf die virtuelle sichere Smartphone-Laufzeitumgebung. Somit ermöglicht bereits eine ganz normale (d.h. nicht besonders gesicherte) Browser-App sicheres Online-Banking - sofern diese beim TCS D in Modus B ausgeführt wird. Da die Browser-App alleine innerhalb des virtuellen TCS-TEE ausgeführt wird, kann prinzipbedingt keine zweite, bösartige App die Browser-App angreifen. Gleichzeitig ist die virtuelle sichere Laufzeitumgebung auf dem Sicherheitsserver - vorzugsweise - als sogenannte Sandbox gestaltet. Hierdurch ist ein Ausbrechen einer bösartigen Applikation aus einer virtuellen sicheren Laufzeitumgebung nicht möglich. Andere im Sicherheitsserver TCS D vorhandene virtuelle Laufzeitumgebungen sind vor Angriffen geschützt.

In Schritt 33 wird der vom Benutzer gewählte Modus ausgeführt. Der Benutzer kann nun mit den Apps der virtuellen sicheren Smartphone-Komplett-Laufzeitumgebung (Modus A) bzw. der einzelnen App (Modus B) wie gewohnt arbeiten, bis er die Sitzung beendet.

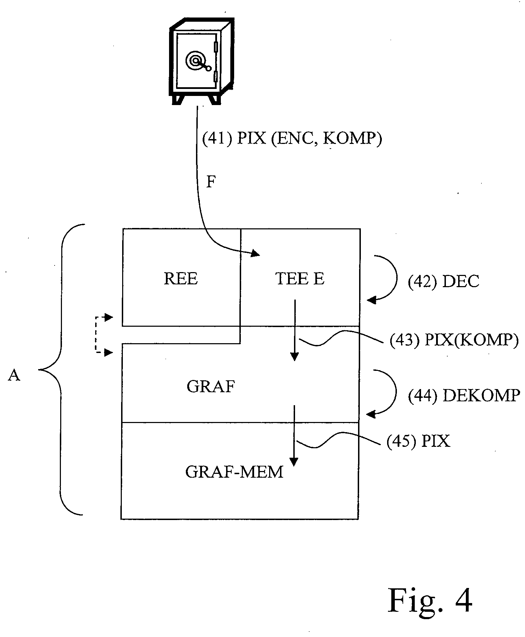

Fig. 4 zeigt die Funktionsweise einer Einblend-Einrichtung, mit der eine virtuelle sichere Laufzeitumgebung eines Sicherheitsservers TCS D in eine reale sichere Laufzeitumgebung TEE E eines Smartphones A einblendbar ist, gemäß einer Ausführungsform der Erfindung. Die Einblend-Einrichtung umfasst einen Server-Einblend-Teil und einen Endgerät-Einblend-Teil.

Der Server-Einblend-Teil erzeugt eine auf einer Ausgabeeinheit (Display) des Smartphone A darstellbare Darstellung PIX (Pixeldarstellung) der virtuellen sicheren Laufzeitumgebung des Sicherheitsservers TCS D, ggf. einschließlich einer oder mehrerer gestarteter Apps. Die virtuelle sichere Laufzeitumgebung des Sicherheitsservers TCS D komprimiert (KOMP) die Darstellung PIX und verschlüsselt (ENC) die komprimierte Darstellung PIX (KOMP) mit einem Sitzungsschlüssel zu einem Chiffrat PIX(ENC, KOMP), mit ENC = encrypt = verschlüsseln und KOMP = komprimieren.

In Schritt 41 sendet die virtuelle sichere Laufzeitumgebung des Sicherheitsservers TCS D das Chiffrat über den sicheren Kanal F an die reale sichere Laufzeitumgebung TEE E des Smartphones A. In der realen sicheren Laufzeitumgebung TEE E des Smartphones A wird das Chiffrat in Schritt 42 entschlüsselt (DEC = decrypt = entschlüsseln). Das Entschlüsselungsergebnis ist die komprimierte Darstellung PIX(KOMP) und wird in Schritt 43 an einen Grafikprozessor GRAF des Smartphone bereitgestellt. Im Grafikprozessor GRF wird in Schritt 44, unter Steuerung der sicheren Laufzeitumgebung TEE E, die komprimierte Darstellung PIX(KOMP) dekomprimiert (DEKOMP), wodurch die durch das Smartphone-Display darstellbare Darstellung PIX wiederhergestellt wird. Diese Darstellung PIX wird in Schritt 45 in den Grafikspeicher GRAF-MEM des Grafikprozessors GRAF abgelegt und auf dem Display zur Anzeige gebracht. Die für die Dekomprimierung notwendige Rechenleistung ist in heutigen Prozessoren für Smartphones vorhanden, da diese über direkt integrierte Grafikeinheiten verfügen. Die Darstellung PIX wird vorzugsweise im Vollbildformat auf dem Display des Smartphone A ausgegeben. Hierdurch können auf dem Display neben der aus der sicheren Laufzeitumgebung TEE E stammenden Bildschirmanzeige keine Bildschirmanzeigen aus der normalen Laufzeitumgebung REE erscheinen, die möglicherweise manipuliert sein könnten.

Der Dekompressor (Schritt 44) für die Bilddaten vom Sicherheitsserver TCS D fällt aufgrund der direkt verfügbaren Grafikhardware relativ einfach aus, und bei Vollbildmodus sogar besonders einfach, da dieser nur die ankommenden Bilddaten PIX(KOMP) in darzustellende Pixel umwandelt. Alle anderen Parameter wie verwendete Auflösung, das Design der Fenster bzw. Benutzeroberfläche, werden ausschließlich vom virtuellen Smartphone-OS beim Sicherheitsserver TCS D berücksichtigt und entfallen somit innerhalb der realen sicheren Laufzeitumgebung TEE E. Der sichere Displaytreiber ist somit nur von der (relativ einheitlichen) Hardware des Smartphone A abhängig und deshalb relativ einfach und platzsparend implementierbar.

Gemäß einer zu Fig. 4 alternativen Ausführungsform wird die verschlüsselte und komprimierte Darstellung PIX(ENC, KOMP) in der realen sicheren Laufzeitumgebung TEE E entschlüsselt, an die normale Laufzeitumgebung REE übergeben und in der normalen Laufzeitumgebung REE dekomprimiert zur Darstellung PIX. Die darstellbare Darstellung PIX wird dann aus der normalen Laufzeitumgebung REE heraus auf dem Display des Smartphone A zur Anzeige gebracht.

## Patentansprüche

1. Endgerät-System umfassend:
- ein mobiles Endgerät (A), in dem ein Sicherheitsbetriebssystem (E) implementiert ist, unter dessen Steuerung in dem Endgerät (A) eine sichere Laufzeitumgebung (E, TEE) herstellbar ist,
- einen Sicherheitsserver (D), auf dem ein Server-Sicherheitsbetriebssystem implementiert ist, unter dessen Steuerung eine virtuelle sichere Laufzeitumgebung auf dem Sicherheitsserver (D) herstellbar ist,
- einen sicheren Kanal (F), über den die virtuelle sichere Laufzeitumgebung des Sicherheitsservers (D) an die sichere Laufzeitumgebung (E) des Endgeräts (A) übertragbar ist, und
- eine Einblend-Einrichtung, mit der die virtuelle sichere Laufzeitumgebung des Sicherheitsservers (D) in die sichere Laufzeitumgebung (E) des Endgeräts (A) einblendbar ist, so dass die tatsächlich auf dem Sicherheitsserver (D) hergestellte virtuelle Laufzeitumgebung als scheinbar auf dem Endgerät (A) hergestellt erscheint,
**dadurch gekennzeichnet, dass** das Endgerät-System weiter eine Applikations-Lade-Einrichtung umfasst, die
- dazu eingerichtet ist, mittels des Endgeräts (A) Applikationen von einem Applikations-Anbieter (C) herunterzuladen, und
- einen auf dem Sicherheitsserver (D) eingerichteten Server-Lade-Teil umfasst, der dazu eingerichtet ist, auf eine Aufforderung vom Endgerät (A) hin eine Applikation herunterzuladen, so dass die Applikation vom Endgerät (A) aus zur Ausführung aufrufbar ist.

2. Endgerät-System nach Anspruch 1, wobei der Kanal (F) dadurch sicher ist, dass er durch gegenseitige Authentisierung und/ oder verschlüsselte Datenübertragung zwischen dem Sicherheitsserver (D) und dem Endgerät (A) geschützt ist.

3. Endgerät-System nach Anspruch 2, das weiter aufweist:
- eine Schnittstelle zu einer Datenbank (DB), in der ein Authentisierungsschlüssel (KA) abgelegt ist, der für eine Authentisierung des Sicherheitsservers (D) gegenüber der sicheren Laufzeitumgebung des Endgeräts (A) erforderlich ist, und
- eine Kanalherstellungs-Einrichtung, die dazu eingerichtet ist, dass bei einer Herstellung des sicheren Kanals (F) zwischen dem Sicherheitsserver (D) und dem Endgerät (A) der Authentisierungsschlüssel (KA) durch den Sicherheitsserver (D) aus der Datenbank (DB) ausgelesen wird.

4. Endgerät-System nach einem der Ansprüche 1 bis 3, wobei die Einblend-Einrichtung einen auf dem Sicherheitsserver (D) eingerichteten Server-Einblend-Teil und einen auf dem Endgerät (A) eingerichteten Endgerät-Einblend-Teil umfasst, wobei
- der Server-Einblend-Teil dazu eingerichtet ist, zu der virtuellen sicheren Laufzeitumgebung des Sicherheitsservers (D) eine auf einer Ausgabeeinheit des Endgeräts (A) darstellbare Darstellung der virtuellen sicheren Laufzeitumgebung des Sicherheitsservers (D) zu erzeugen, und
- der Endgerät-Einblend-Teil dazu eingerichtet ist, die erzeugte Darstellung der virtuellen sicheren Laufzeitumgebung des Sicherheitsservers (D) entgegenzunehmen und an der Ausgabeeinheit des Endgeräts (A) darzustellen.

5. Endgerät-System nach Anspruch 4, wobei
- der Server-Einblend-Teil dazu eingerichtet ist, eine durch einen Grafiktreiber eines Displays des Endgeräts (A) verarbeitbare Darstellung (PIX) der virtuellen sicheren Laufzeitumgebung des Sicherheitsservers (D) zu erzeugen und
- der Endgerät-Einblend-Teil dazu eingerichtet ist, die erzeugte Darstellung (PIX) an den Grafiktreiber des Displays des Endgeräts (A) bereitzustellen.

6. Endgerät-System nach Anspruch 1, wobei die Applikations-Lade-Einrichtung weiter eine Ladeziel-Festlegungs-Einrichtung umfasst, mit der ein Ladeziel festlegbar ist, an welches die Applikation geladen wird, wobei als Ladeziel festlegbar ist:
- entweder der Sicherheitsserver (D), so dass die auf den Sicherheitsserver (D) heruntergeladene Applikation in der virtuellen sicheren Laufzeitumgebung ausführbar ist,
- oder das Endgerät (A), so dass die in das Endgerät (A) heruntergeladene Applikation im Endgerät (A) ausführbar ist.

7. Endgerät-System nach Anspruch 6, wobei in dem Endgerät (A) weiter ein Normalbetriebssystem implementiert ist, unter dessen Steuerung in dem Endgerät (A) eine normale Laufzeitumgebung (E) herstellbar ist, und wobei die in das Endgerät (A) heruntergeladene Applikation entweder in der sicheren Laufzeitumgebung des Endgeräts (A) oder in der normalen Laufzeitumgebung des Endgeräts (A) ausführbar ist.

8. Endgerät-System nach einem der Ansprüche 1 bis 7, das weiter zumindest eine Applikation umfasst, die auf dem Sicherheitsserver (D) implementiert ist und aus der sicheren Laufzeitumgebung des Endgeräts (A) heraus derart aufrufbar ist, dass die Applikation, sobald sie aufgerufen ist, tatsächlich auf dem Sicherheitsserver (D) in der virtuellen sicheren Laufzeitumgebung des Sicherheitsservers (D) ausgeführt wird und scheinbar auf dem Endgerät (A) ausgeführt wird.

9. Endgerät-System nach Anspruch 8, wobei mehrere Applikationen gleichzeitig aufgerufen sein können.

10. Endgerät-System nach Anspruch 8, wobei jeweils nur eine einzige Applikation gleichzeitig aufgerufen sein kann.

## Claims

1. A terminal system comprising
- a mobile terminal (A), in which a security operating system (E) is implemented under whose control a secure runtime environment (E, TEE) can be produced in the terminal (A),
- a security server (D), on which a server security operating system is implemented under whose control a virtual secure runtime environment can be produced on the security server (D),
- a secure channel (F), via which the virtual secure runtime environment of the security server (D) is transmissible to the secure runtime environment (E) of the terminal (A), and
- an inset device, with which the virtual secure runtime environment of the security server (D) can be inset into the secure runtime environment (E) of the terminal (A), so that the virtual runtime environment actually produced on the security server (D) appears as apparently produced on the terminal (A),
**characterized in that** the terminal system further comprises an application loading device, which
- is adapted to download applications from an application provider (C) by means of the terminal (A), and
- comprises a server loading portion installed on the security server (D), which is adapted to download an application upon request by the terminal (A), so that the application can be called for execution from the terminal (A).

2. The terminal system according to claim 1, wherein the channel (F) is secure by being protected through mutual authentication and/or encrypted data transmission between the security server (D) and the terminal (A).

3. The terminal system according to claim 2, further having:
- an interface to a database (DB) in which an authentication key (KA) is stored which is required for an authentication of the security server (D) vis-à-vis the secure runtime environment of the terminal (A), and
- a channel production device which is adapted so that the authentication key (KA) is read out from the database (DB) by the security server (D) upon production of the secure channel (F) between the security server (D) and the terminal (A).

4. The terminal system according to any one of claims 1 to 3, wherein the inset device comprises a server inset portion installed on the security server (D) and a terminal inset portion installed on the terminal (A), wherein,
- the server inset portion is adapted to produce on the basis of the virtual secure runtime environment of the security server (D) a representation of the virtual secure runtime environment of the security server (D) representable on an output unit of the terminal (A),
- the terminal inset portion is adapted to accept the produced representation of the virtual secure runtime environment of the security server (D) and to represent it on the output unit of the terminal (A).

5. The terminal system according to claim 4, wherein
- the server inset portion is adapted to produce a representation (PIX) of the virtual secure runtime environment of the security server (D) that is processable by a graphics driver of a display of the terminal (A) and
- the terminal inset portion is adapted to supply the produced representation (PIX) to the graphics driver of the display of the terminal (A).

6. The terminal system according to claim 1, wherein the application loading device further comprises a loading-target determining device with which a loading target can be determined to which the application is loaded, wherein there can be determined as loading target:
- either the security server (D), so that the application downloaded to the security server (D) is executable in the virtual secure runtime environment,
- or the terminal (A), so that the application downloaded to the terminal (A) is executable in the terminal (A).

7. The terminal system according to claim 6, wherein in the terminal (A) further a normal operating system is implemented under whose control a normal runtime environment (E) can be produced in the terminal (A), and wherein the application downloaded to the terminal (A) is executable either in the secure runtime environment of the terminal (A) or in the normal runtime environment of the terminal (A).

8. The terminal system according to any one of claims 1 to 7, further comprising at least one application which is implemented on the security server (D) and can be called from the secure runtime environment of the terminal (A) such that the application, as soon as it is called, is actually executed on the security server (D) in the virtual secure runtime environment of the security server (D) and is apparently executed on the terminal (A).

9. The terminal system according to claim 8, wherein several applications can be called at the same time.

10. The terminal system according to claim 8, wherein only one single application can be called at the same time.

## Revendications

1. Système de terminal comprenant :
- un terminal (A) mobile dans lequel un système d'exploitation de sécurité (E) est mis en oeuvre, sous la commande duquel, dans le terminal (A), un environnement d'exécution sécurisé (E, TEE) peut être généré,
- un serveur de sécurité (D) sur lequel un système d'exploitation de sécurité de serveur est mis en oeuvre, sous la commande duquel un environnement d'exécution sécurisé virtuel peut être généré sur le serveur de sécurité (D),
- un canal sécurisé (F) par l'intermédiaire duquel l'environnement d'exécution sécurisé virtuel du serveur de sécurité (D) peut être transmis à l'environnement d'exécution (E) sécurisé du terminal (A), et
- un dispositif d'affichage avec lequel l'environnement d'exécution sécurisé virtuel du serveur de sécurité (D) peut être affiché dans l'environnement d'exécution (E) sécurisé du terminal (A), de telle sorte que l'environnement d'exécution virtuel qui est en fait généré sur le serveur de sécurité (D) apparaît comme étant apparemment généré sur le terminal (A),
**caractérisé en ce que** le système de terminal comprend en outre un dispositif de chargement d'applications qui
- est conçu pour, au moyen du terminal (A), télécharger des applications d'un fournisseur d'applications (C), et
- comprend un élément de chargeur de serveur qui est installé sur le serveur de sécurité (D) et qui est conçu pour, à la suite d'une demande du terminal (A), télécharger une application, de telle sorte que l'application est appelable depuis le terminal (A) pour être exécutée.

2. Système de terminal selon la revendication 1, cependant que le canal (F) est sécurisé par le fait qu'il est protégé par une authentification mutuelle et/ou par transmission cryptée de données entre le serveur de sécurité (D) et le terminal (A).

3. Système de terminal selon la revendication 2, qui comprend en outre :
- une interface vers une banque de données (DB) dans laquelle une clé d'authentification (KA) est déposée, laquelle est nécessaire à une authentification du serveur de sécurité (D) vis-à-vis de l'environnement d'exécution sécurisé du terminal (A), et
- un dispositif de génération de canal qui est conçu pour que, lors d'une génération du canal (F) sécurisé entre le serveur de sécurité (D) et le terminal (A), la clé d'authentification (KA) puisse être lue par le serveur de sécurité (D) depuis la banque de données (DB).

4. Système de terminal selon une des revendications de 1 à 3, cependant que le dispositif d'affichage comprend un élément d'affichage de serveur installé sur le serveur de sécurité (D), et un élément d'affichage de terminal installé sur le terminal (A), cependant que
- l'élément d'affichage de serveur est conçu pour, en correspondance avec l'environnement d'exécution sécurisé virtuel du serveur de sécurité (D), générer une représentation, représentable sur une unité de sortie du terminal (A), de l'environnement d'exécution sécurisé virtuel du serveur de sécurité (D),
- l'élément d'affichage de terminal est conçu pour réceptionner la représentation générée de l'environnement d'exécution sécurisé virtuel du serveur de sécurité (D) et pour la représenter à l'unité de sortie du terminal (A).

5. Système de terminal selon la revendication 4, cependant que
- l'élément d'affichage de serveur est conçu pour générer une représentation (PIX), pouvant être traitée par un pilote graphique d'un écran du terminal (A), de l'environnement d'exécution sécurisé virtuel du serveur de sécurité (D), et
- l'élément d'affichage de terminal est conçu pour mettre la représentation (PIX) générée à disposition du pilote graphique de l'écran du terminal (A).

6. Système de terminal selon la revendication 1, cependant que le dispositif de chargement d'applications comprend en outre un dispositif de fixation de cible de chargement avec lequel une destination de chargement à laquelle l'application va être chargée peut être fixée, cependant que, en tant que destination de chargement, on peut fixer :
- soit le serveur de sécurité (D), de telle sorte que l'application téléchargée sur le serveur de sécurité (D) est exécutable dans l'environnement d'exécution sécurisé virtuel,
- soit le terminal (A), de telle sorte que l'application téléchargée dans le terminal (A) est exécutable dans le terminal (A).

7. Système de terminal selon la revendication 6, cependant que, dans le terminal (A), en outre, un système d'exploitation normal est mis en oeuvre, sous la commande duquel, dans le terminal (A), un environnement d'exécution normal (E) peut être généré, et cependant que l'application téléchargée dans le terminal (A) est exécutable soit dans l'environnement d'exécution sécurisé du terminal (A), soit dans l'environnement normal du terminal (A).

8. Système de terminal selon une des revendications de 1 à 7, lequel comprend en outre au moins une application qui est mise en oeuvre sur le serveur de sécurité (D) et qui, depuis l'environnement d'exécution sécurisé du terminal (A), est appelable de telle façon que l'application, dès qu'elle est appelée, est exécutée en réalité sur le serveur de sécurité (D) dans l'environnement d'exécution sécurisé virtuel du serveur de sécurité (D), et apparemment sur le terminal (A).

9. Système de terminal selon la revendication 8, cependant que plusieurs applications peuvent être appelées en même temps.

10. Système de terminal selon la revendication 8, cependant que respectivement une seule application peut être appelée en même temps.
